# EUROPÄISCHE PATENTSCHRIFT

(11) **EP 2 440 626 B1**
(45) Veröffentlichungstag und Bekanntmachung des Hinweises auf die Patenterteilung: **15.01.2014**
(21) Anmeldenummer: 10725600.0
(22) Anmeldetag: 26.05.2010
(51) Int. Cl.: C09D 167/08, C09D 175/06

(54) **VERWENDUNG EINER WACHSHALTIGEN ZUSAMMENSETZUNG ALS BESCHICHTUNG VON OBERFLÄCHEN ZUR VERBESSERUNG IHRER REINIGBARKEIT**
USE OF A WAXY COMPOSITION AS A COATING OF SURFACES FOR IMPROVING THE CLEANABILITY THEREOF
UTILISATION D'UNE COMPOSITION CONTENANT DE LA CIRE COMME REVÊTEMENT DE SURFACES EN VUE D'EN AMÉLIORER LA FACILITÉ DE NETTOYAGE

(30) Priorität: 09.06.2009 DE 202009008205 U
(43) Veröffentlichungstag der Anmeldung: 18.04.2012
(73) Patentinhaber: Dinol GmbH, 32676 Lüdge (DE)
(72) Erfinder: PFAU, Hans, 31812 Bad Pyrmont (DE)
(74) Vertreter: Emmel, Thomas
(86) Internationale Anmeldenummer: PCT/EP2010/003182
(87) Internationale Veröffentlichungsnummer: WO 2010/142374

(56) Entgegenhaltungen:
- EP-A2- 0 798 349
- WO-A1-2009/013169
- DE-A1-102006 056 688

## Beschreibung

Die Erfindung bezieht sich auf die Verwendung spezieller wachshaltiger Zusammensetzungen als Beschichtung von Oberflächen insbesondere solcher Einrichtungen, die regelmäßig mit Farbe oder mit Kunstoffen verunreinigt werden.

Solche Einrichtungen finden sich z.B. in Lackierstraßen, bzw. Lackieranlagen oder Lackierplätzen. Es kann sich z.B. um Bodenflächen, SKIDS, Gitterroste, Abluftanlagen oder dergleichen handeln. Eine Reinigung insbesondere solcher Einrichtungen von Farbverunreinigungen, auch als Entlackung bezeichnet, stellt ein großes Problem dar.

Ein weiteres mögliches Anwendungsfeld der Erfindung sind Einrichtungen, die bei formgebenden Verfahren für Kunststoffe, wie z.B. Spritzguss, Tiefziehen etc. zum Einsatz kommen.

Im Falle von Farbverunreinigungen erfolgt die Entlackung üblicherweise mit einem Hochdruck-Wasserstrahl mit einem Druck von bis zu 3.000 bar. Die Reinigung mit einem solchen Hochdruck-Wasserstrahl ist für das Reinigungspersonal gefährlich. Außerdem führt sie zu einem erhöhten Verschleiß der gereinigten Einrichtungen. Etwas moderatere, aber grundsätzlich ähnliche Bedingungen sind bei der Reinigung von z.B. durch Kunststoff verunreinigten Formen oder dergleichen gegeben. Hier erfolgt die Reinigung in der Regel mit einem Wasserstrahl bei 1.500 bar.

Diesem Problem wird im Stand der Technik unter anderem dadurch begegnet, dass die Oberflächen mit einer Beschichtung versehen werden, die eine Reinigung von Verunreinigungen, z.B. Verunreinigungen durch Farbe, erleichtern soll.

Die britische Patentanmeldung GB 2 227 187 A1 offenbart ein Verfahren zur Vorbehandlung z. B. eines Trägergitters einer Lackier-Einrichtung mit z.B. Ethanol oder Glycerol. Eine solche Vorbehandlung bildet allerdings keine mehrere Reinigungszyklen überdauernde Beschichtung aus.

Weiterhin zu nennen sind die DE 10 2005 037 338 A1, die eine partikuläre Antihaftbeschichtung betrifft und die EP 1 591 500 B1, die auf einen speziellen Anti-Graffiti-Belag auf Basis eines Urethanacrylatharzes gerichtet ist.

Eine weitere Beschichtung zur Verhinderung von Verschmutzungen beschreibt die DE 10 2004 053 384 A1. Diese Beschichtung enthält ein organofunktionelles Silansystem.

Speziell für Lackierstrassen sind Beschichtungen auf Teflon-Basis bekannt. Aus dem Gebrauchsmuster DE 202 04 460 U1 ist bekannt, dass die Umlenkrollen von Förderbändern entsprechend beschichtet werden können, um ihre Adhäsion gegenüber Farbpigmenten herabzusetzen. Eine ähnliche Beschichtung, wiederum auf Teflon-Basis beschreibt das Gebrauchsmuster G 86 24 980.0 für Haken von Durchlauf-Lackieranlagen.

Die EP 0 798 349 A2 offenbart Zusammensetzungen enthaltend ein polymeres Bindemittel, ein Wachs, gegebenenfalls ein Sulfonat als Emulgator sowie eine flüssige Trägerkomponente. Die Zusammensetzungen können als Basis Beschichtung zur Verbesserung der Reinigbarkeit eingesetzt werden.

Aus der DE 20 2005 005 698 A1 schließlich ist eine Beschichtung bekannt, mit der wiederum speziell Einrichtungen von Lackierstraßen beschichtet werden können und die eine leichtere Reinigung von Farbverunreinigungen ermöglichen soll. Es handelt sich dabei um eine plasmapolymere, Sauerstoff, Kohlenstoff und Silizium umfassende Beschichtung, die nur relativ aufwändig darzustellen ist.

Aufgabe der Erfindung ist es, ausgehend von dem Stand der Technik eine kostengünstigere Möglichkeit für eine beständige und gut zu reinigende Beschichtung von gefährdeten Oberflächen zu schaffen.

Dies wird durch die Verwendung der in Anspruch 1 angegebenen Zusammensetzung als Beschichtung von Oberflächen erreicht.

Die Zusammensetzung umfasst:
- 1. Alkydharz als Bindemittel in einem Bereich von 20 - 60 Gew.-%
- 2. Sulfonate in einem Bereich von 10 - 30 Gew.-%
- 3. ein Wachs, insbesondere ein Mikrowachs in einem Bereich von 1 - 10 Gew.-% und
- 4. Lösemittel auf Basis aliphatischer Kohlenwasserstoffe in einem Bereich von 10 - 50 Gew.-%

Überraschend hat sich herausgestellt, dass die erfindungsgemäß verwendete Zusammensetzung eine Beschichtung bildet, die sich mit deutlich geringerem Aufwand von Verunreinigungen, z.B. Farb- oder Kunststoffverunreinigungen, reinigen lässt und die gleichzeitig eine hohe Beständigkeit, auch gegenüber den z. B. in Lackierstraßen erhöhten Temperaturen von bis zu 250°C aufweist.

Ohne daran gebunden zu sein, wird angenommen, dass die Beständigkeit der Beschichtung auf die spezielle Lösemittel-Alkydharz-Kombination zurückzuführen ist, während die Kombination aus Wachs und Sulfonat der Beschichtung die haftungsreduzierenden Eigenschaften verleiht.

Vorzugsweise ist das als Bindemittel eingesetzte Alkydharz ein Urethanöl. Bevorzugte Alkydharz-Konzentrationen liegen in einem Bereith zwischen 35 und 50 Gew.-%.

Sulfonate werden bevorzugt in einem Bereich zwischen 15 und 25 Gew.-% eingesetzt. Bevorzugt wird als Sulfonat ein organisches Calciumsulfonat in der Zusammensetzung vorgesehen. Denkbar sind aber selbstverständlich auch andere in diese Gruppe fallende Verbindungen.

Als Lösemittel auf Basis aliphatischer Kohlenwasserstoffe wird bevorzugt Test-benzin eingesetzt. Bevorzugte Lösemittelkonzentrationen liegen in einem Bereich zwischen 20 und 30 Gew.-%.

Das Wachs wird insbesondere in einer Konzentration zwischen 2 und 6 Gew.-% vorgesehen.

Bei dem in der verwendeten Zusammensetzung enthaltenen Wachs handelt es sich vorzugsweise um Mikrowachs. Besonders geeignet sind Mikrowachse mit einem Schmelzbereich von 60 - 90°C.

Weiterhin geeignet sind aber auch Paraffinwachse mit einem Erstarrungsbereich von 50 - 90°C und Polyethylenwachse mit einem Schmelzbereich von 95 - 135°C.

Die Zusammensetzung ist nicht nur auf die bislang genannten Komponenten beschränkt. Es ist selbstverständlich möglich, noch weitere Komponenten zuzusetzen.

So ist in einer Ausgestaltung z. B. vorgesehen, dass ein Trockner für das Alkydharz in einer Konzentration von weniger als 1 Gew.-% zugesetzt ist. Es kann sich dabei z. B. um Cobaltoctoat handeln.

Weiterhin können zur Erhöhung der haftungsabweisenden Eigenschaften Paraffine in einem Konzentrationsbereich zwischen 1 und 10 Gew.-% zugesetzt sein. Besonders geeignet ist z. B. Paraffin.

Weiterhin ist in einer Ausgestaltung vorgesehen, dass die Zusammensetzung Hautverhütungsmittel in einer Konzentration von weniger als 1 Gew.-% enthält.

Die Beschichtung der zu schützenden Oberflächen kann auf die übliche Weise durch z. B. Sprühen, Tauchen oder sonstige Auftragungsmethoden erfolgen. In der Regel ist die Beschichtung nach einer Trocknungsphase von 4 Stunden einsatzbereit.

Mit der erfindungsgemäß verwendeten Beschichtung lassen sich Oberflächen aus unterschiedlichen Materialien mit den gewünschten haftungsreduzierenden Eigenschaften versehen. Eine Reinigung so beschichteter Oberflächen von Verunreinigungen, insbesondere Farb- oder Kunststoffverunreinigungen, kann mit einem Wasserstrahl bei Drücken zwischen 120 und 500 bar erfolgen.

Die Zusammensetzung lässt sich sowohl auf metallische Oberflächen als auch auf Oberflächen aus Plastik, Holz und selbst Beton auftragen. In jedem Fall bildet sie eine haftungs-reduzierende Beschichtung, die die Oberflächenadhäsion von z.B. Farbverunreinigungen oder Kunststoffüberschüssen reduziert.

Der Begriff Farbe ist weit zu fassen. Es kann sich dabei um gängige Lacke, wie sie z. B. in der Automobilindustrie verwendet werden, handeln. Denkbar sind aber auch alle anderen Farben und Materialien, die in technischen oder auch nicht-technischen Anwendungen zum Einsatz kommen. Die erfindungsgemäß verwendete Zusammensetzung eignet sich auch als Beschichtung von Einrichtungen in der Druck- oder Holzindustrie, die mit Druckfarbe verunreinigt werden können. Auch solche Einrichtungen, z.B. Druckerpressen, lassen sich, wenn sie mit der Zusammensetzung beschichtet sind, besser reinigen.

Aufgrund der Tatsache, dass sich mit der Zusammensetzung neben Metalloberflächen auch z. B. Betonoberflächen beschichten lassen, ist eine Verwendung der Zusammensetzung weiterhin auch als Anti-Graffiti-Beschichtung denkbar.

Auch der Begriff Kunststoffe ist weit zu fassen. Mit diesem Begriff sollen alle gängigen Ausgangsmaterialien für formgebende Prozesse abgedeckt sein. Zu Verunreinigungen kann es bei solchen Prozessen insbesondere aufgrund des üblicherweise im Überschuss eingesetzten zu formenden Kunststoffmaterials kommen, aber natürlich auch auf andere Weise. Mit dem Begriff Verunreinigung sollen alle Möglichkeiten abgedeckt sein, die zu einem ungewollten Anhaften von Kunststoffresten an Einrichtungen in solchen Prozessen führen.

Ein weiterer wesentlicher Vorteil der erfindungsgemäßen Zusammensetzung ist, dass sie eine beständige, auch temperaturbeständige, Beschichtung ausbildet. Untersuchungen der Anmelderin haben ergeben, dass die Beschichtung über einem Zeitraum von mindestens 20 in Lackiereinrichtungen üblichen Reinigungszyklen stabil ist, also der beschichteten Oberfläche die gewünschten Eigenschaften verleiht.

Eine weiterer Vorteil der erfindungsgemäß als Beschichtung verwendeten Zusammensetzung ist, dass sie keine die Lackbenetzung störende Substanzen nach außen abgibt. Dies ist eine wichtige Voraussetzung für ihre Verwendung in Lackierstrassen. In Lackierstrassen darf es auf keinen Fall dazu kommen, dass sich Teile einer Beschichtung während des Lackierprozesses von den Oberflächen lösen und z. B. auf den zu lackierenden Gegenstand fallen. Genauso wenig darf eine als Beschichtung verwendete Zusammensetzung Substanzen enthalten, die z. B. gasförmig oder flüssig aus der Beschichtung austreten und dann den Lackierprozess stören. Es hat sich überraschend herausgestellt, dass die erfindungsgemäß verwendete Zusammensetzung keine den Lackiervorgang störende Substanzen abgibt und weiterhin aufgrund ihrer Beständigkeit auch keine Gefahr besteht, dass sich Partikel ablösen. Vermutlich ist dies darauf zurückzuführen, dass die lackabweisenden Komponenten über die spezielle Alkydharz-Lösemittel-Kombination besonders fest in die Beschichtung eingebettet sind.

Zusammengefasst ermöglicht die erfindungsgemäße Verwendung auf der einen Seite Einsparungen, z.B. geringerer Energie- und Wasserverbrauch bei der Reinigung, Verringerung der Wartungs- und Instandhaltungskosten oder Reduzierung des Teileverschleißes. Weiterhin kommt es generell zu einer geringeren Verschmutzung von beschichteten Einrichtungen bzw. Komponenten. Insbesondere bei z.B. schlecht zugänglichen und daher schwierig zu reinigenden Einrichtungen, wie z.B. Abluftanlagen führt eine geringere Verschmutzung, die eine seltenere Reinigung erfordert, zu einer erheblichen Erleichterung. Schließlich ist ein weiterer wesentlicher Aspekt, dass die Arbeitssicherheit erhöht wird, da im Gegensatz zu dem Stand der Technik bei der Reinigung deutlich niedrigere Wasserdrücke eingesetzt werden.

Eine typische im Rahmen der Erfindung einsetzbare Rezeptur weist z.B. folgende Zusammensetzung auf: Alkydharz 39%, organisches Calciumsulfonat 22%, Testbenzin 27,8%, Cobaltoctoat 0,1%, Mikrowachs 5%, Paraffin 5 und Butanonomoxim 0.1 %

In Tabelle 1 sind die in der Zusammensetzung zwingend und optional enthaltenen Komponenten mit ihren möglichen Einsatzkonzentrationsbereichen noch einmal zusammengestellt.

**Tab. 1**

| **Nr.** | **Einzelkomponenten der Rezeptur** | **Oberbegriff** | **Spanne** |
|---|---|---|---|
| | | | |
| 1 | Urethanöl | Alkydharze | 20-60Gew.-% |
| 2 | Organisches Calciumsulfonat | Sulfonate | 10-30Gew.-% |
| 3 | Testbenzin | Aliphatische Kohlenwasserstoffe | 10-50Gew.-% |
| 4 | Cobaltoctoat | Trockner | <1Gew.-% |
| 5 | Mikrowachs | Wachs | 1-10Gew.-% |
| 6 | Paraffin | Paraffine | 1-10Gew.-% |
| 7 | Butanonoxim | Hautverhütungsmittel | <1Gew.-% |

Es wurde eine Rezeptur gemäß Angaben in der Tabelle hergestellt. Die Konzentration der Komponenten konnte in dem jeweils angegebenen Bereich je nach gewünschten Eigenschaften frei gewählt werden. Ein höherer Anteil Alkydharz führt z.B. zu einer Beschichtung mit erhöhter Beständigkeit, während z.B. ein hoher Wachsanteil die Anti-Adhäsionseigenschaften der Beschichtung verbessert.

Die Herstellung erfolgte durch Mischen der angegebenen Komponenten bei erhöhten Temperaturen bis 120C°. Zur Testung der Rezeptur wurden Trägergitter und Laufgitterroste einer Lackierstraße mit der Zusammensetzung durch Tauchen beschichtet. Denkbar je nach Oberflächenbeschaffenheit der Einrichtungen sind aber auch andere Beschichtungsverfahren wie z.B. Besprühen oder Vorstreichen etc. Die so beschichteten Einrichtungen bzw. Objekte wurden jeweils für ca. 5 Schichten a 8 h im Lackierbetrieb eingesetzt. Danach erfolgte eine Reinigung, die in einfacher Weise mit einem Wasserstrahl bei Drücken zwischen 120 und 500 bar erfolgte. Erste Untersuchungen der Anmelderin ergaben eine Beständigkeit der Beschichtung für mindestens 20 Reinigungszyklen. Die Beständigkeit hängt dabei im wesentlichen von dem Druck des eingesetzten Wasserstrahls und dem Verschmutzungsgrad ab.

## Patentansprüche

1. Verwendung einer wachshaltigen Zusammensetzung als Beschichtung von Oberflächen zur Verbesserung ihrer Reinigbarkeit, wobei die Zusammensetzung umfasst:
- i. Alkydharz als Bindemittel in einem Bereich von 20 - 60 Gew.-%
- ii. Sulfonate in einem Bereich von 10 - 30 Gew.-%
- iii. ein Wachs, insbesondere ein Mikrowachs in einem Bereich von 1 - 10 Gew.-% und
- iv. Lösemittel auf Basis aliphatischer Kohlenwasserstoffe in einem Bereich von 10 - 50 Gew.-%.

2. Verwendung nach Anspruch 1, **dadurch gekennzeichnet, dass** das Alkydharz in Konzentrationen zwischen 35 und 50 Gew.-% in der Zusammensetzung enthalten ist.

3. Verwendung nach einem der vorhergehenden Ansprüche, **dadurch gekennzeichnet, dass** das Alkydharz ein Urethanöl ist.

4. Verwendung nach einem der vorhergehenden Ansprüche, **dadurch gekennzeichnet, dass** das Sulfonat in einem Bereich zwischen 15 und 25 Gew.-% in der Zusammensetzung enthalten ist.

5. Verwendung nach Anspruch 1 oder 4, **dadurch gekennzeichnet, dass** als Sulfonat organisches Calciumsulfonat in der Zusammensetzung enthalten ist.

6. Verwendung nach einem der vorhergehenden Ansprüche, **dadurch gekennzeichnet, dass** das Lösemittel in einem Bereich zwischen 20 und 30 Gew.-% in der Zusammensetzung enthalten ist.

7. Verwendung nach Anspruch 1 oder 6, **dadurch gekennzeichnet, dass** das Lösemittel Testbenzin ist.

8. Verwendung nach einem der vorhergehenden Ansprüche, **dadurch gekennzeichnet, dass** das Wachs in einer Konzentration zwischen 2 und 6 Gew.-% in der Zusammensetzung enthalten ist.

9. Verwendung nach Anspruch 1 oder 8, **dadurch gekennzeichnet, dass** das Wachs ein Mikrowachs mit einem Schmelzbereich von 60 - 90°C ist, ein Paraffinwachs mit einem Erstarrungsbereich von 50 - 90°C und/oder ein Polyethylenwachs mit einem Schmelzbereich von 95 - 135°C ist.

10. Verwendung nach einem der vorhergehenden Ansprüche, **dadurch gekennzeichnet, dass** die Zusammensetzung weiterhin einen Trockner für das Alkydharz, insbesondere Cobaltoctoat, in einer Konzentration von weniger als 1 Gew.-%. enthält.

11. Verwendung nach einem der vorhergehenden Ansprüche, **dadurch gekennzeichnet, dass** die zu beschichtenden Oberflächen Oberflächen von Einrichtungen in Lackierstrassen , Lackierräumen und/oder plätzen sind.

12. Verwendung nach Anspruch 11, **dadurch gekennzeichnet, dass** die zu beschichtenden Oberflächen die inneren Wände von Abluftanlagen und - kanälen umfassen.

13. Verwendung nach einem der Ansprüche 1 bis 10, **dadurch gekennzeichnet, dass** die zu beschichtenden Oberflächen Oberflächen von Einrichtungen in formgebenden Verfahren für Kunstoffe sind.

## Claims

1. Use of a wax-containing composition as a surface coating in order to improve the cleanability of the surfaces, whereby the composition comprises:
- i. alkyd resin as binding agent at a concentration in the range of 20
- 60 % by weight
- ii. sulfonates at a concentration in the range of 10 - 30 % by weight
- iii. a wax, in particular a micro-wax at a concentration in the range of 1 - 10 % by weight, and
- iv. aliphatic hydrocarbon-based solvent at a concentration in the range of 10 - 50 % by weight.

2. Use according to claim 1, **characterized in that** the composition contains the alkyd resin at concentrations between 35 and 50 % by weight.

3. Use according to any one of the preceding claims, **characterized in that** the alkyd resin is a urethane oil.

4. Use according to any one of the preceding claims, **characterized in that** the composition contains the sulfonate at a concentration in the range between 15 and 25 % by weight.

5. Use according to claim 1 or 4, **characterized in that** the composition contains organic calcium sulfonate as sulfonate.

6. Use according to any one of the preceding claims, **characterized in that** the composition contains the solvent at a concentration in the range between 20 and 30 % by weight.

7. Use according to claim 1 or 6, **characterized in that** the solvent is white spirit.

8. Use according to any one of the preceding claims, **characterized in that** the composition contains the wax at a concentration between 2 and 6 % by weight.

9. Use according to claim 1 or 8, **characterized in that** the wax is a micro-wax having a melting range of 60 - 90°C, a paraffin wax having a solidification range of 50 - 90°C and/or a polyethylene wax having a melting range of 95 - 135°C.

10. Use according to any one of the preceding claims, **characterized in that** the composition further contains a drying agent for the alkyd resin, in particular cobalt octoate, at a concentration of less than 1 % by weight.

11. Use according to any one of the preceding claims, **characterized in that** the surfaces to be coated are surfaces of devices in paint finishing lines, enameling rooms or enameling stations.

12. Use according to claim 11, **characterized in that** the surfaces to be coated comprise the internal walls of exhaust air plants and ducts.

13. Use according to any one of the claims 1 to 10, **characterized in that** the surfaces to be coated are surfaces of devices in forming processes for plastic materials.

## Revendications

1. Application d'une composition contenant de la cire mise en oeuvre comme revêtement de surfaces en vue d'en améliorer la nettoyabilité, la composition comprenant :
- i. de la résine alkyde contenue comme liant en une proportion de 20 à 60 % en poids
- ii. des sulfonates contenus en une proportion de 10 à 30 % en poids
- iii. une cire, notamment une microcire, contenue en une proportion de 1 à 10 % en poids et
- iv. un solvant à base d'hydrocarbures aliphatiques contenu en une proportion de 10 à 50 % en poids.

2. Application selon la revendication 1, **caractérisée en ce que** la résine alkyde est contenue dans la composition en des concentrations comprises entre 35 et 50 % en poids.

3. Application selon l'une des revendications précédentes, **caractérisée en ce que** la résine alkyde est une huile d'uréthane.

4. Application selon l'une des revendications précédentes, **caractérisée en ce que** le sulfonate est contenu dans la composition en une proportion comprise entre 15 et 25 % en poids.

5. Application selon la revendication 1 ou 4, **caractérisée en ce que** le sulfonate contenu dans la composition est un sulfonate de calcium organique.

6. Application selon l'une des revendications précédentes, **caractérisée en ce que** le solvant est contenu dans la composition en une proportion comprise entre 20 et 30 % en poids.

7. Application selon la revendication 1 ou 6, **caractérisée en ce que** le solvant est du white spirit.

8. Application selon l'une des revendications précédentes, **caractérisée en ce que** la cire est contenue dans la composition en une concentration comprise entre 2 et 6 % en poids.

9. Application selon la revendication 1 ou 8, **caractérisée en ce que** la cire est une microcire avec une température de fusion de 60 à 90 °C, une cire de paraffine avec une température de solidification de 50 à 90 °C et/ou une cire de polyéthylène avec une température de fusion de 95 à 135 °C.

10. Application selon l'une des revendications précédentes, **caractérisée en ce que** la composition contient en outre un siccatif pour la résine alkyde, notamment de l'octoate de cobalt en une concentration inférieure à 1 % en poids.

11. Application selon l'une des revendications précédentes, **caractérisée en ce que** les surfaces à recouvrir sont des surfaces d'installations dans les lignes de peinture et/ou les cabines ou emplacements de peinture.

12. Application selon la revendication 11, **caractérisée en ce que** les surfaces à recouvrir sont les faces intérieures d'installations et canaux d'évacuation d'air vicié.

13. Application selon l'une des revendications 1 à 10, **caractérisée en ce que** les surfaces à recouvrir sont les surfaces d'équipements utilisées dans les procédés de façonnage.
